# EUROPEAN PATENT APPLICATION

(11) **EP 0 949 097 A2**
(43) Date of publication of application: **13.10.1999**
(21) Application number: 99302719.2
(22) Date of filing: 07.04.1999
(51) Int. Cl.: B60H 1/00

(54) **Air conditioner for vehicles**

(30) Priority: 09.04.1998 JP 11430998
(71) Applicant: Sanden Corporation, Isesaki-shi, Gunma 372-8502 (JP)
(72) Inventor: Sakurai, Hirotaka, Isesaki-shi, Gunma 372-8502 (JP); Kawabata, Akio, Isesaki-shi, Gunma 372-8502 (JP)
(74) Representative: Jackson, Peter Arthur

(57) **Abstract**

An air conditioner 1 for vehicles has heat exchangers 7, 8 and an air mixing door 11 in a duct 2. The air mixing door 11 is slid in a direction across a hot air path 10 and a cold air path 9 formed in the duct 2, for adjusting the amounts of air flow passing through the respective hot and cold air paths. The air conditioner 1 comprises a sliding mechanism 22 having a sliding lanyard 23, composed of a wire or a belt, that connects to the air mixing door 11. The sliding mechanism 22 for the sliding type air mixing door 11 may be reduced in size. Therefore, the size of the air mixing door 11 including the sliding mechanism 22 may be reduced, thereby achieving size reduction of the entire air conditioner 1.

## Description

The present invention relates to an air conditioner for vehicles, and, more specifically, to an air conditioner having a sliding type air mixing door for adjusting the mixing ratio of hot air and cold air.

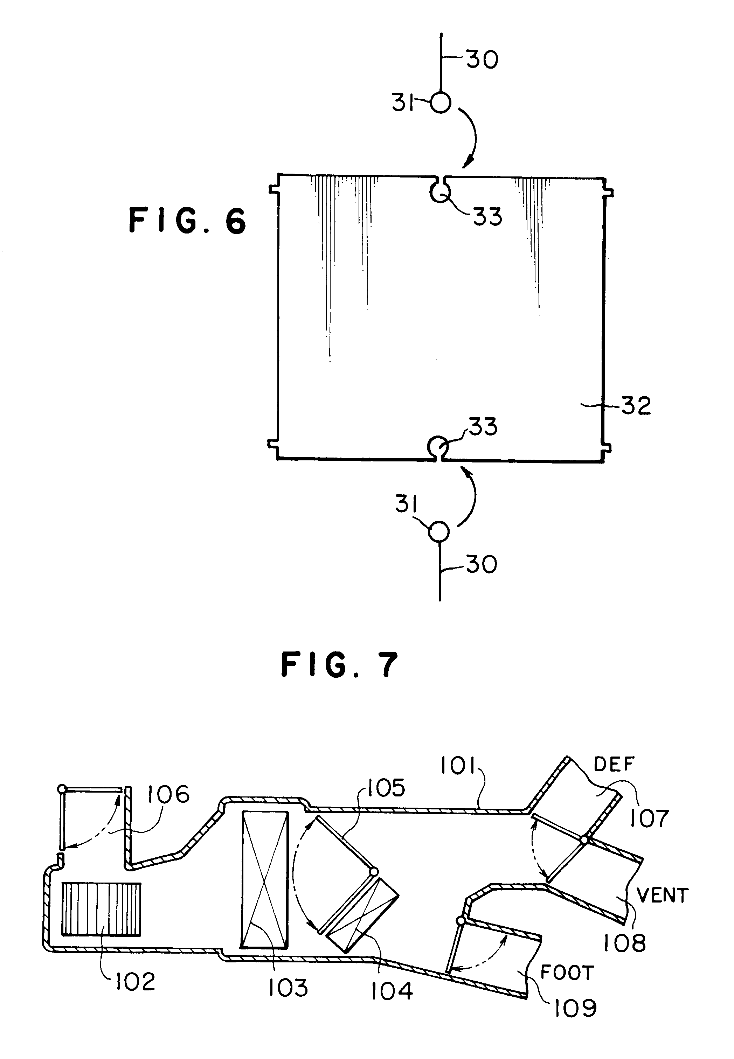

A conventional air conditioner for vehicles is depicted in Fig. 7 and described below. Blower 102, evaporator 103 provided as a cooling device, and heater core 104 provided as a heating device, are disposed in this order in air duct 101. A rotary type air mixing damper 105 is provided at a position upstream of heater core 104. Air flow enters through suction port 106 and passes through evaporator 103. The amount of air flow passing through heater core 104 is adjusted by air mixing damper 105. The temperature conditioned air flow exits to a vehicle interior through an air discharge port, or ports, selected from DEF mode discharge port 107, VENT mode discharge port 108 and FOOT mode discharge port 109.

As depicted in Fig. 7, a space for the rotary operation of air mixing damper 105 is provided between evaporator 103 and heater core 104. The space inhibits reducing the size of the air conditioner.

In order to reduce the size of an air conditioner, a structure having a sliding type air mixing door may be provided instead of the above-described rotary type air mixing damper. A sliding type air mixing door is described in Japanese patent publications JP-A-10-35246 and JP-A-8-282248.

Referring to Japanese patent publication JP-A-10-35246, a lever engages an air mixing door. The lever directly controls the air mixing door. A space encloses the driving mechanism, which prevents the size reduction of the structure. Moreover, a groove for guiding the air mixing door divides into a plurality of guide grooves. Thus, a space for forming the guide grooves also may be needed. Therefore, the size of the structure may be increased.

Referring to Japanese patent publication JP-A-8-282248, a link-lever mechanism controls an air mixing door. This sliding mechanism is complex, and the size of the air conditioner also may be increased because the link-lever mechanism extends into the air flow mixing zone.

It would be desirable to provide an air conditioner for vehicles having a sliding mechanism for a desired operation of an air mixing door, and which reduces the size of the sliding mechanism for the air mixing door of the air conditioner.

An air conditioner for vehicles according to the present invention is provided. The air conditioner for vehicles according to the present invention has a plurality of heat exchangers and an air mixing door in a duct. The air mixing door slides in a direction across a hot air path and a cold air path formed in the duct. The air mixing door adjusts the amounts of air flow passing through the respective hot and cold air paths by its sliding operation. The air conditioner further comprises a sliding mechanism having a sliding lanyard composed of a wire or a belt. The lanyard connects to the air mixing door for sliding the air mixing door.

The plurality of heat exchangers comprise a cooling device, such as an evaporator, and a heating device, such as a heater core. The air mixing door is disposed between the cooling device and the heating device. In a preferred embodiment, the air mixing door forms a rigid material.

The air mixing door is guided along a guide groove when sliding. It is preferred that the guide groove is formed so that the air mixing door may be guided away from one of the plurality of heat exchangers when the air mixing door slides, and the air mixing door may come into approximate contact with the heat exchanger when the movement of the air mixing door is completed. The guide groove extends continuously from a position corresponding to a first end of the sliding route of the air mixing door to a position corresponding to a second end of the sliding route of the air mixing door.

The air mixing door slides by the operation of the sliding lanyard. The sliding mechanism for sliding the lanyard includes a wheel for supporting the sliding lanyard. It is preferred that the sliding lanyard encircles the wheel at least once. The sliding lanyard may be connected to the end of the air mixing door at at least two positions, respectively. To achieve improved connection between the air mixing door and the sliding lanyard, it is preferred that a fitting portion connects the respective ends of the air mixing door and the sliding lanyard.

In such an air conditioner for vehicles according to the present invention, because the air mixing door is driven by the sliding lanyard composed of a wire or a belt, the size of the sliding mechanism may be reduced. Therefore, with respect to the miniaturization of the air conditioner, in addition to reducing the size of the sliding type air mixing door, the size of the sliding mechanism of the air mixing door may be reduced. As a result, the size of the air mixing door including the sliding mechanism may be reduced, thereby reducing the size of the air conditioner.

Further objects, features, and advantages of the present invention will be understood from the following detailed description of the preferred embodiments of the present invention with reference to the accompanying figures.

Preferred embodiments of the invention are now described with reference to the accompanying figures, which are given by way of example only, and are not intended to limit the present invention.

Fig. 1 is a schematic vertical sectional view of an air conditioner for vehicles according to an embodiment of the present invention.

Fig. 2 is an enlarged, partial, vertical sectional view of the air conditioner depicted in Fig. 1.

Fig. 3 is an elevational view of an air mixing door of the air conditioner depicted in Fig. 1.

Fig. 4 is an elevational view of an air mixing door of an air conditioner according to another embodiment of the present invention.

Fig. 5 is an elevational view of an air mixing door of an air conditioner according to another embodiment of the present invention.

Fig. 6 is an elevational view of an air mixing door of an air conditioner according to another embodiment of the present invention.

Fig. 7 is a vertical sectional view of a conventional air conditioner for vehicles.

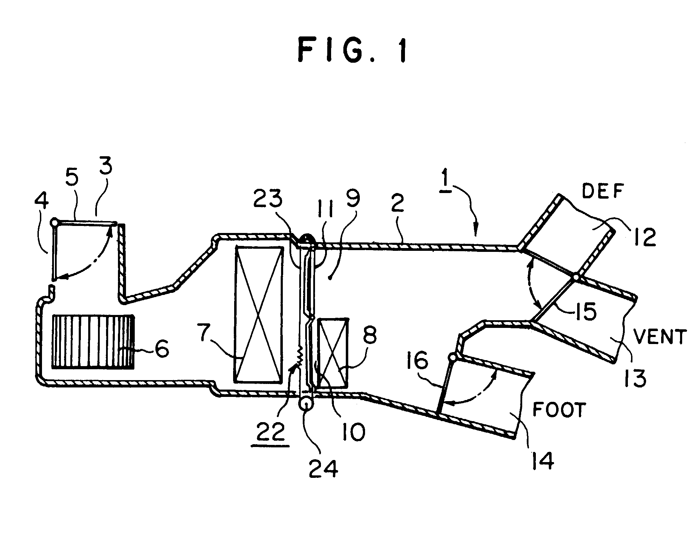

Figs. 1-3 depict an embodiment of an air conditioner for vehicles in accordance with the present invention. In Fig. 1, air conditioner 1 includes an air duct 2. Outside air intake port 3 and inside air intake port 4 are provided on the air intake side of duct 2. Damper 5 adjusts the intake ratio of the outside air to the inside air. Blower 6 is provided at a position downstream of intake ports 3 and 4. Blower 6 sucks air and sends the sucked air downstream in duct 2.

Evaporator 7 is a cooling device and heater core 8 is a heating device disposed at positions downstream of blower 6. The air flow path above heater core 8 is formed as a cold air flow path 9. The cold air flow passes evaporator 7. The air flow path through evaporator 7 is formed as a hot air flow path 10.

A sliding type air mixing door 11 is provided between evaporator 7 and heater core 8. In an embodiment, air mixing door 11 is immediately upstream of heater core 8. Air mixing door 11 slides in a direction across cold air flow path 9 and hot air flow path 10 to adjust the amounts of air passing through cold air flow path 9 and air passing through hot air flow path 10 in accordance with the desired air conditioning mode.

Respective air discharge ports such as DEF mode discharge port 12, VENT mode discharge port 13 and FOOT mode discharge port 14 are formed downstream in duct 2. Dampers 15 and 16 adjust the air flow blown from mode discharge ports 12, 13 and 14.

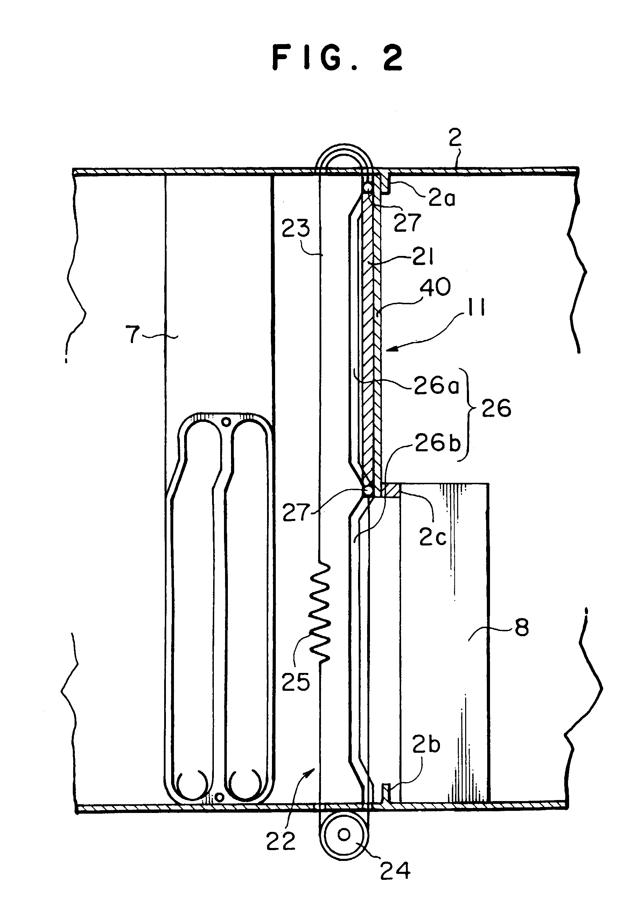

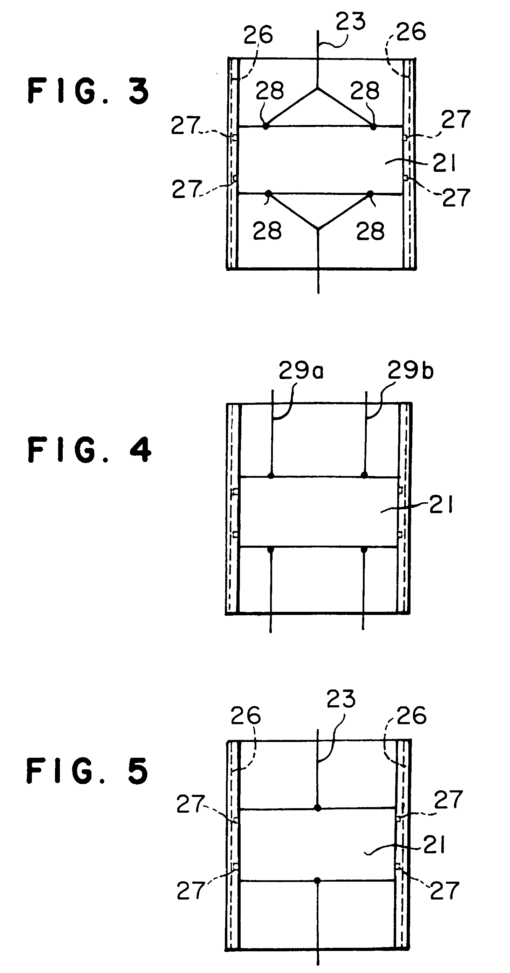

Figs 2 and 3 depict sliding type air mixing door 11 and the sliding mechanism thereof. Air mixing door 11 includes a door body 21 that slides and a sliding mechanism 22 for sliding door body 21. Sliding mechanism 22 has a sliding lanyard 23 connected to the upper and lower ends of door body 21. A wheel 24 supports sliding lanyard 23. In an embodiment, sliding lanyard 23 is formed from a wire, and wheel 24 is formed as a pulley. Alternatively, sliding lanyard 23 may be formed from a belt. A spring 25 attaches to sliding lanyard 23 for giving an appropriate tension to sliding lanyard 23. Sliding lanyard 23 encircles wheel 24 at least once. In another embodiment, sliding lanyard 23 encircles wheel 24 one and a half times. Thus, the sliding force transmits from wheel 24 to sliding lanyard 23 without slipping. Wheel 24 may be driven by a motor actuator. Alternatively, wheel 24 may be driven by a link-arm mechanism.

Door body 21 slides vertically in Fig. 2 by operation of sliding lanyard 23. When door body 21 slides, door body 21 is guided along a guide groove 26. Pins 27 are on both sides of door body 21, and pins 27 also are guided along guide groove 26. Guide groove 26 comprises an upper guide groove 26a and a lower guide groove 26b. Guide grooves 26a and 26b connect at the lower end of guide groove 26a and the upper end of lower guide groove 26b. Guide grooves 26a and 26b have a polygonal line shape so that door body 21 is guided away from the side of heater core 8 when door body 21 slides downward or upward. Further, door body 21 contacts or approaches the side of heater core 8 when door body 21 has finished sliding. Therefore, when door body 21 slides, door body 21 does not come into contact with heater core 8, thereby increasing the durability of heater core 8 and door body 21. When door body 21 has finished sliding, door body 21 pushes toward the side of heater core 8, thereby sealing the air flow path.

In an embodiment, a flange 2a extends from the inner upper surface of duct 2 at a position approximate the upper end of guide groove 26a. Further, a flange 2b extends from the inner lower surface of duct 2 at a position approximate the lower end of guide groove 26b. A beam 2c extends between the inner surfaces of the side walls of duct 2. A packing 40 is fixed on one surface of door body 21. When door body 21 is positioned at the upper end or the lower end of guide groove 26, packing 40 comes into contact with flange 2a and beam 2c, or beam 2c and flange 2b, respectively. Thus, leakage of the air flow may be reduced by the structure having packing 40, flanges 2a and 2b, and beam 2c associated with the polygonal line structure of guide grooves 26a and 26b.

With respect to the connection of door body 21 and sliding lanyard 23, as depicted in Fig. 3, the end of sliding lanyard 23 diverges into two wire portions. The ends of the two wire portions connect to the ends of the door body at two positions 28. The two wire portions converge as a single lanyard 23, and single lanyard 23 slides according to the above-described operation. Thus, door body 21 may be aligned by the two point connection, and door body 21 slides in a smooth manner.

Other connecting structures may be. Referring to Fig. 4, two sliding lanyards 29a and 29b connect to the ends of door body 21, and sliding lanyards 29a and 29b may be slid simultaneously. Referring to Fig. 5, a single sliding lanyard 23 connects to each end of door body 21. In this embodiment, door body 21 aligns with guide grooves 26 provided on both sides of door body 21.

An appropriate fitting portion may connect the door body and the sliding lanyard. Referring to Fig. 6, a circular or spherical engaging portion 31 attaches to each end of sliding lanyard 30, and a fitting portion 33, such as a hole or a notched portion, is at each end of door body 32. Engaging portions 31 fit into fitting portions 33. Thus, a connection may be completed by a one step process.

In the air conditioner for vehicles described above, the space for the air mixing door mechanism using sliding type air mixing door 11 may be reduced as compared with the structure for a rotary type air mixing damper as depicted in Fig. 7. Moreover, by using sliding lanyard 23, comprised of a wire or a belt, for the sliding mechanism of air mixing door 11, the space for the sliding mechanism also may be reduced. As a result, the air mixing door portion may be reduced, thereby achieving a desired reduction of the entire air conditioner.

Furthermore, as depicted in Fig. 2, the sliding mechanism using sliding lanyard 23 may be constructed in a simple manner. Thus, complex structure may be avoided, such as a link mechanism.

## Claims

1. An air conditioner for vehicles comprising a plurality of heat exchangers and an air mixing door in a duct, said air mixing door being capable of sliding in a direction across a hot air path and a cold air path formed in said duct, thereby adjusting amounts of air flow passing through said respective hot and cold air paths, characterized in that said air conditioner further comprises a sliding mechanism having a sliding lanyard connected to said air mixing door.

2. The air conditioner according to claim 1, wherein said plurality of heat exchangers include a cooling device and a heating device, said air mixing door is disposed between said cooling device and said heating device.

3. The air conditioner according to claim 1 or 2, wherein said air mixing door is formed from a rigid material.

4. The air conditioner according to any preceding claim, wherein said air conditioner comprises a guide groove along which said air mixing door is slid.

5. The air conditioner according to claim 4, wherein said guide groove is formed so that said air mixing door is guided away from one of said plurality of heat exchangers when said air mixing door is slid and said air mixing door comes into approximate contact with the heat exchanger when the sliding of said air mixing door is complete.

6. The air conditioner according to claim 4 or 5, wherein said guide groove continuously extends from a position corresponding to a first end of a sliding route of said air mixing door to a position corresponding to a second end of said sliding route of said air mixing door.

7. The air conditioner according to any preceding claim, wherein said air conditioner comprises a wheel for supporting said sliding lanyard, and said sliding lanyard encircles said wheel at least once.

8. The air conditioner according to any preceding claim, wherein said sliding lanyard is connected to an end of said air mixing door at at least two positions.

9. The air conditioner according to any preceding claim, wherein a fitting portion for connecting said air mixing door and said sliding lanyard is provided on said air mixing door and said driving lanyard.

10. The air conditioner according to any preceding claim, wherein said sliding lanyard is a wire.

11. The air conditioner according to any preceding claim, wherein said sliding lanyard is a belt.
